# EUROPÄISCHE PATENTSCHRIFT

(11) **EP 2 622 116 B1**
(45) Veröffentlichungstag und Bekanntmachung des Hinweises auf die Patenterteilung: **18.02.2015**
(21) Anmeldenummer: 11749438.5
(22) Anmeldetag: 01.09.2011
(51) Int. Cl.: D02J 13/00, D06B 23/02, F26B 13/18, G01K 13/08

(54) **GALETTE**
GODET
GALETTE

(30) Priorität: 29.09.2010 DE 102010046898
(43) Veröffentlichungstag der Anmeldung: 07.08.2013
(73) Patentinhaber: Oerlikon Textile GmbH & Co. KG, 42897 Remscheid (DE)
(72) Erfinder: SAUER, Arnulf, Lennestadt Lennestadt (DE)
(74) Vertreter: Neumann, Ditmar
(86) Internationale Anmeldenummer: PCT/EP2011/065071
(87) Internationale Veröffentlichungsnummer: WO 2012/041626

(56) Entgegenhaltungen:
- EP-A1- 0 872 584
- EP-A1- 0 953 663
- EP-A2- 0 345 720
- DE-B3- 10 236 316
- DE-C1- 4 417 009
- DE-U1- 20 220 813
- JP-A- 8 296 142

## Beschreibung

Die Erfindung betrifft eine Galette zur Führung von Fäden gemäß dem Oberbegriff des Anspruchs 1.

Bei der Herstellung und Bearbeitung von synthetischen Fäden werden zum Fördern, Führen und Verstrecken der Fäden sogenannte Galetten eingesetzt, die einen antreibbaren Führungsmantel aufweisen, an welchem ein oder auch mehrere Fäden parallel nebeneinander geführt werden. Um neben der Führung, Förderung oder Verstreckung der Fäden gleichzeitig eine thermische Behandlung an den Fäden ausführen zu können, wird der Führungsmantel der Galette während des Betriebes mittels einer Heizeinrichtung auf eine vorbestimmte Oberflächentemperatur erhitzt. Bei Kontakt mit einem oder mehreren Fäden mit dem Führungsmantel tritt somit eine Erwärmung des Fadenmaterials ein. Eine derartige Galette ist beispielsweise aus der DE 196 13 433 A1 bekannt.

Bei der bekannten Galette wird der Führungsmantel über eine Induktionsheizvorrichtung erwärmt, die im Innern eines topfförmig ausgebildeten Führungsmantels angeordnet ist. Innerhalb des Führungsmantels ist zumindest ein Wärmerohr derart mit dem Führungsmantel verbunden, das sich ein über den Umfang des Führungsmantels gleichmäßiges Temperaturprofil einstellt. Hierbei besteht die Möglichkeit, die Wärmeverteilung innerhalb des Führungsmantels über eine Mehrzahl von Einzelrohren oder über eine Rohrschlange zu realisieren.

Bei der bekannten Galette lässt sich die durch die Induktionsheizvorrichtung induzierte Erwärmung innerhalb des Führungsmantels über den Umfang des Führungsmantels verteilen. Um jedoch bestimmte Oberflächentemperaturen am Umfang des Führungsmantels einstellen zu können, sind zusätzliche Mittel wie beispielsweise Temperatursensoren und eine Heizsteuerung erforderlich.

Auf der Suche nach geeigneten Galetten mit einstellbaren Oberflächentemperaturen sind grundsätzlich zwei Arten von Messmitteln zur Bestimmung einer Temperatur in einem rotierenden Führungsmantel der Galette zu unterscheiden. Bei einer ersten Variante wird die Temperatur des Führungsmantels unmittelbar durch Kontakt mit dem Führungsmantel erfasst. Eine derartige Galette ist beispielsweise aus der US 5,665,043 bekannt. Bei dieser bekannten Galette wird der Führungsmantel der Galette durch mehrere Induktionsspulen einer Induktionsheizvorrichtung erwärmt. Die sich jeweils in dem Führungsmantel der Galette einstellende Temperatur wird durch mehrere in dem Führungsmantel integrierte Temperatursensoren erfasst. Die Temperatursensoren sind über Signalleitungen mit einem Drehübertrager verbunden, so dass die Messsignale einer Steuereinrichtung zuführbar sind. In diesem Fall ist der Führungsmantel in mehreren Zonen aufgeteilt, um ein möglichst gleichmäßiges Temperaturprofil zu erhalten. Insoweit ist eine wesentlich komplexere Heizeinrichtung und Heizsteuerung erforderlich. Zudem müssen zusätzliche Aufnahmen innerhalb des Führungsmantels geschaffen werden, um die Temperatursensoren zu integrieren.

Bei einer zweiten grundsätzlich im Stand der Technik bekannten Variante werden Messmittel eingesetzt, die auf eine kontaktlose Bestimmung der Temperatur des Führungsmantels basieren. So ist beispielsweise aus der DE 1 660 215 eine Galette bekannt, bei welcher ein Temperaturfühler stirnseitig in eine umlaufende Nut des Führungsmantels eingreift. Der Temperaturfühler ist an einem ortsfesten Träger gehalten. Die Erwärmung des Führungsmantels erfolgt durch eine Induktionsspule, die im Innern des Führungsmantels gehalten ist. Bei dieser bekannten Galette sind Temperaturunterschiede an den jeweiligen Stirnenden des Führungsmantels unvermeidlich, da die sich an einem der Stirnenden in dem Führungsmantel annähernd einstellende Oberflächentemperatur nur näherungsweise bestimmt werden kann. Die Temperaturbestimmung ist im Wesentlichen von dem Übergang und den Spalten zwischen dem rotierenden Teil des Führungsmantels und dem stationären Temperaturfühler abhängig.

Auch neueste Entwicklungen, wie beispielsweise aus der DE 10 2008 030 804 A1 bekannt, bei welcher die Oberflächentemperatur des Führungsmantels durch ein außerhalb des Galettenmantels angeordneten Temperaturmessmittel erfasst wird, müssen die durch die in der Galette vorherrschenden Umgebungseinflüsse berücksichtigen, um über den gesamten Führungsmantel ein gleichmäßiges Temperaturprofil zu erhalten. Auch hierbei wird der Führungsmantel der Galette durch eine Heizeinrichtung mit mehreren Induktionsspulen beheizt.

Es ist nun Aufgabe der Erfindung, eine Galette der eingangs genannten Art derart weiterzubilden, dass möglichst ein vergleichmäßigtes Temperaturprofil auch für unterschiedliche Temperaturen des Führungsmantels realisierbar sind.

Diese Aufgabe wird erfindungsgemäß dadurch gelöst, dass innerhalb des Fernrohres ein Temperatursensor angeordnet ist, welcher mit einer aus dem Wärmerohr herausführenden Signalleitung verbunden ist.

Vorteilhafte Weiterbildungen der Erfindung sind durch die Merkmale und Merkmalskombinationen der jeweiligen Unteransprüche definiert.

Die Erfindung zeichnet sich dadurch aus, dass an dem Führungsmantel der Galette keine weiteren baulichen Veränderungen vorzunehmen sind, um eine möglichst exakte Bestimmung und Messung der Temperatur des Führungsmantels ausführen zu können. Durch die Integration des Temperatursensors innerhalb des Wärmerohres wird einerseits ein bereits vorhandener Einbauraum des Wärmerohres genutzt, um den Temperatursensor im Innern des Führungsmantels zu platzieren. Desweiteren wird die Temperatur des Führungsmantels maßgeblich durch die Wärmeverteilung des Wärmerohres beeinflusst. Insoweit ist eine exakte Bestimmung der Temperatur des Führungsmantels möglich.

Um die Funktion des Wärmerohres innerhalb des Führungsmantels nicht zu stören, wird die Signalleitung bevorzugt durch eine abgedichtete Signalöffnung an einem Ende des Wärmerohres nach außen geführt. So bleibt durch die axiale Verlegung des Signalleitung innerhalb des Wärmerohres der funktionsbedingte Aufbau des Wärmerohres unbeeinflusst.

Die Führung der Signalleitung ist besonders vorteilhaft zu gestalten, wenn das Wärmerohr in einer von mehreren axial ausgerichteten Sacklochbohrungen des Führungsmantels angeordnet ist und das Ende des Wärmerohres mit der Signalleitung der Öffnung der Sacklochbohrung zugeordnet ist. Hierbei werden vorzugsweise eine Mehrzahl an Sacklochbohrungen am Umfang des Führungsmantels verteilt ausgebildet, um eine Mehrzahl von Wärmerohren aufzunehmen. Die benachbarten Wärmerohre sind jedoch vorteilhaft ohne Temperatursensoren ausgestattet.

Um den Führungsmantel möglichst über seine gesamte Umfangsfläche beheizen zu können und andererseits einen gleichmäßigen Antrieb des Führungsmantels zu realisieren, ist der Führungsmantel gemäß einer vorteilhaften Weiterbildung der Erfindung topfförmig ausgebildet und weist ein offenes Stirnende und ein gegenüberliegendes geschlossenes Stirnende auf, wobei der Führungsmantel über das geschlossene Stirnende fest mit einer Antriebswelle verbunden ist.

In diesem Fall sind die Öffnungen des Sacklochbohrungen im Führungsmantel bevorzugt an der geschlossenen Stirnwand ausgebildet. Diese erleichtert den Zugang zu den Wärmerohren, die vorteilhaft auswechselbar in den Sacklochbohrungen gehalten sind. Zudem lässt sich die Signalleitung am Ende des Messrohres an dem geschlossenen Stirnende weiterführen.

Um die durch den Temperatursensor erzeugten Messsignale einer Steuereinrichtung zu übermitteln, ist die Signalleitung vorteilhaft mit einem Drehübertrager verbunden, der aus einem mit dem Führungsmantel umlaufenden Sendeteil und einem ortsfesten Empfangsteil besteht.

Je nachdem welcher Art und Weise die Signalübertragung erfolgt, lässt sich der Sendeteil im Bereich vom geschlossenen Stirnende des Führungsmantels oder am Umfang der Antriebswelle anordnen. So sind Signalübertragungen zwischen dem Sendeteil und dem Empfangsteil optisch, induktiv oder per Funk möglich.

Dementsprechend lässt sich das Empfangsteil an einem ortsfesten Lagerträger oder außerhalb der Galette anordnen. Der Empfangsteil führt die Messsignale unmittelbar einer Heizsteuerung zu, so dass die Heizeinrichtung zur Einstellung bestimmter Temperaturen steuerbar ist.

Die Integration des Temperatursensors innerhalb des Wärmerohres erfolgt bevorzugt gemäß einer vorteilhaften Weiterbildung der Erfindung derart, dass der Temperatursensor innerhalb des Wärmerohres von dem Arbeitsmedium umspült ist. So können ggf. die bei der Vergleichmäßigung und Auslegung der Wärmerohre berücksichtigten Wärmeleitungseinflüsse bei der Bestimmung der Temperatur berücksichtigt werden.

Als Temperatursensor wird vorzugsweise ein Widerstandsthermometer verwendet, welche einen Nennwiderstand von 1 KΩ aufweist. Damit wird eine hohe Empfindlichkeit und Messgenauigkeit zur Erfassung kleiner Differenzen möglich.

Gemäß einer weiteren Weiterbildung der Erfindung wird die Heizeinrichtung bevorzugt als eine Induktionsheizvorrichtung mit einer Induktionsspule ausgebildet, welche Induktionsspule mit Abstand zu dem Führungsmantel angeordnet ist. Diese vorzugsweise auf eine Hochfrequenz basierende elektrische Beheizung des Führungsmantels hat sich besonders in den rauen Umgebungen von Spinnanlagen, in welchen synthetische Fäden erzeugt werden, bewährt.

Um die an den Stirnenden des Führungsmantels auftretenden Energieverluste im vornherein zu kompensieren, ist die Weiterbildung der Erfindung besonders vorteilhaft, bei welcher die Induktionsspule eine Breite aufweist, die sich im wesentlichen vom offenen Stirnende bis zum geschlossenen Stirnende des Führungsmantels erstreckt, wobei die Windungsdichte der Induktionsspule zu den Stirnenden hin größer ist als in einem mittleren Bereich des Führungsmantels. Damit wird eine höhere Energiedichte an den Stirnenden des Führungsmantels erzeugt, die vorteilhaft einen Wärmeabfluss auch bei hohen Umfangsgeschwindigkeiten des Führungsmantels kompensieren. Insoweit ist die erfindungsgemäße Galette besonders geeignet, um synthetische Fäden mit hohen Umfangsgeschwindigkeiten im Bereich von 3.500 m/min. und darüber zu führen und gleichzeitig zu erwärmen.

Die erfindungsgemäße Galette wird nachfolgend anhand einiger Ausführungsbeispiele unter Bezug auf die beigefügten Figuren näher erläutert.

Es stellen dar:
- Fig. 1: schematisch eine Querschnittansicht eines ersten Ausführungsbeispiels der erfindungsgemäßen Galette
- Fig. 2: schematisch eine Vorderansicht des Ausführungsbeispiels aus Fig. 1
- Fig. 3: schematisch ein weiteres Ausführungsbeispiel der erfindungsgemäßen Galette

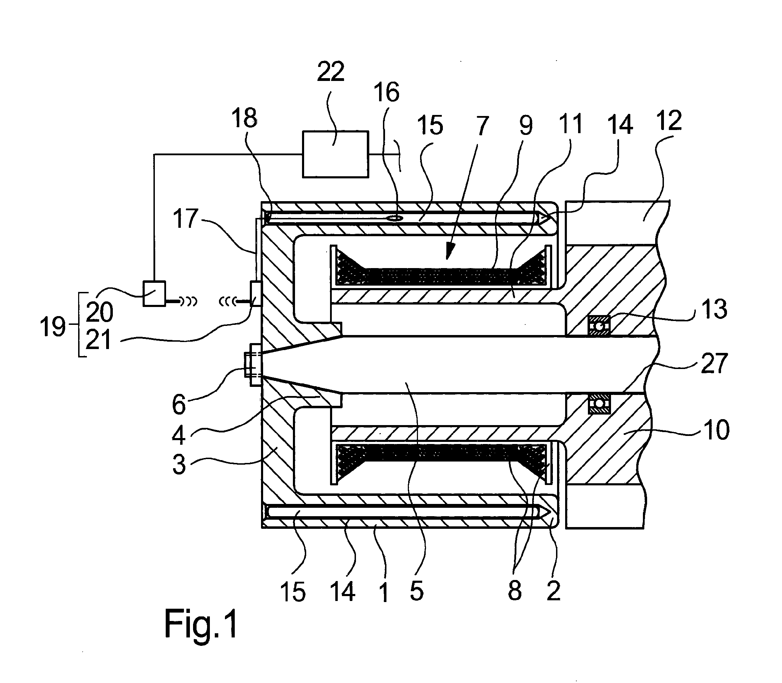

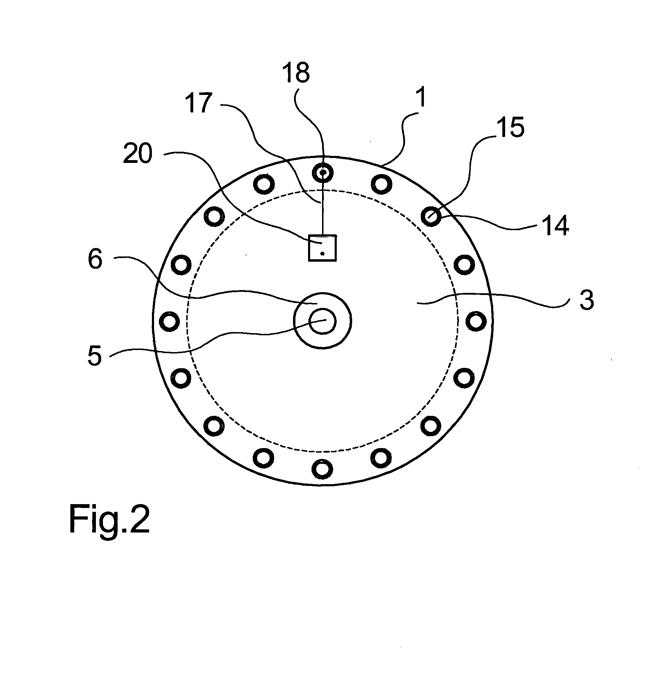

In den Fig. 1 und 2 ist ein erstes Ausführungsbeispiel der erfindungsgemäßen Galette schematisch in einer Querschnittansicht dargestellt. Das Ausführungsbeispiel weist einen topfförmigen Führungsmantel 1 auf, der über das Ende einer Antriebswelle 5 gestülpt ist. Der Führungsmantel 1 weist hierzu ein offenes Stirnende 2 und ein gegenüberliegendes geschlossenes Stirnende 3 auf. An dem geschlossenen Stirnende 3 ist in der Achsmitte des Führungsmantels 1 eine Nabe 4 vorgesehen, durch welche der Führungsmantel 1 am Ende der Antriebswelle 5 gehalten ist. Hierbei wird die Nabe 4 des Führungsmantels 1 durch ein Fixiermittel 6 am Umfang der Antriebswelle 5 gehalten.

Die Antriebswelle 5 ist in einem Lagergehäuse 10 durch ein Lager 13 drehbar gelagert. Die Antriebswelle 5 durchdringt hierzu das Lagergehäuse 10 an der Lagerbohrung 27. Mit dem zum Führungsmantel 1 gegenüberliegenden Ende ist die Antriebswelle 5 mit einem Elektromotor gekoppelt. Das Antriebsende sowie die Ankopplung an den Elektromotor ist in der Darstellung in Fig. 1 nicht näher gezeigt.

Das Lagergehäuse 10 weist in dem Bereich außerhalb des Führungsmantels 1 mehrere Kühlrippen 12 auf, die an dem Umfang des Lagergehäuses 10 angeordnet sind. An der zum Führungsmantel 1 hingewandten Seite trägt das Lagergehäuse 10 einen auskragenden hohlzylindrischen Heizträger 11, der in den zwischen dem Führungsmantel 1 und der Antriebswelle 5 gebildeten Ringraum hineinragt. Der Heizträger 11 erstreckt sich dabei im Wesentlichen bis kurz vor dem geschlossenen Stirnende 3 des Führungsmantels. Am Umfang des Heizträgers 11 ist eine Heizeinrichtung 7 angeordnet. Die Heizeinrichtung 7 ist als Induktionsheizvorrichtung ausgebildet und weist eine Induktionsspule 8 auf. Die Induktionsspule 8 weist eine Mehrzahl von Windungen 9 auf, die sich in einem Bereich zwischen dem offenen Stirnende 2 und dem geschlossenen Stirnende 3 erstreckt. Die Windungen 9 sind innerhalb der Induktionsspule in unterschiedlichen Windungsdichten abgelegt. In den Bereich zu den Stirnenden 2 und 3 des Führungsmantels 1 hin, weist die Induktionsspule 8 eine erhöhte Windungsdichte der Windungen 9 auf. Im mittleren Bereich des Führungsmantels 1 sind dementsprechend weniger Windungen 9 an der Induktionsspule 8 ausgebildet. Die Induktionsspule 8 ist über hier nicht dargestellte elektrische Verbindungen mit einer Heizsteuerung 22 gekoppelt.

In dem Führungsmantel 1 sind über den Umfang der Wandung verteilt mehrere Sacklochbohrungen 14 eingebracht, die den Führungsmantel 1 ausgehend von dem geschlossenen Ende 3 bis kurz vor dem offenen Stirnende 2 in axiale Richtung durchdringen. In jedem der Sacklochbohrungen 14 ist jeweils ein Wärmerohr 15 eingelassen. Jedes der Wärmerohe 15 weist im Innern ein Arbeitsmedium auf, um eine Vergleichmäßigung der Temperatur innerhalb des Führungsmantels über die gesamte Umfangsfläche zu erzeugen.

In einem der Wärmerohre 15 ist ein Temperatursensor 16 angeordnet, der über eine Signalleitung 17 mit einem Drehübertrager 19 verbunden ist. Die Signalleitung 17 wird hierzu durch eine abgedichtete Signalöffnung 18 am Ende des Wärmerohres 15 aus dem Wärmerohr 15 herausgeführt und ist am geschlossenen Stirnende 3 des Führungsmantels 1 verlegt. Die Signalleitung 17 verbindet den Temperatursensor 16 im Innern des Wärmerohres 15 mit einem Sendeteil 20 des Drehübertrages 19. Der Sendeteil 20 ist hierzu am geschlossenen Stirnende 3 angeordnet. Der Drehübertrager 19 weist einen mit dem Sendeteil 20 korrespondierenden Empfangsteil 21 auf, das außerhalb des Führungsmantels 1 angeordnet ist. Die Signalübertragung erfolgt hierbei zwischen dem Sendeteil 20 und dem Empfangsteil 21 per Funk. Das Empfangsteil 21, welches die Funksignale des Sendeteils 20 empfängt, übermittelt die daraus bestimmten Messsignale des Temperatursensors 16 an die Heizsteuerung 22. Hierzu ist das Empfangsteils 21 mit der Heizsteuerung 22 verbunden.

Bei dem in Fig. 1 und 2 dargestellten Ausführungsbeispiel der Galette wird der Führungsmantel 1 durch die Heizeinrichtung 7 auf eine vorbestimmte Temperatur erwärmt. Um über die Umfangsfläche des Führungsmantels 1 insbesondere im Bereich einer Belegelänge, an welchem ein oder mehrere Fäden geführt sind, eine gleichmäßige und identische Oberflächentemperatur zu erhalten, wird die in dem Führungsmantel 1 durch Induktion erzeugte Wärmeenergie über die Wärmerohre 15 in den Führungsmantel 1 gleichmäßig verteilt. In einem der Wärmerohre 15 ist der Temperatursensor 16 vorzugsweise mittig angeordnet, wobei der Temperatursensor 16 von dem Arbeitsmedium innerhalb des Wärmerohres 15 umspült wird. Die Messsignale des Temperatursensors 16 werden über die Signalleitung 17 und dem Drehübertrager 19 der Heizsteuerung 22 zugeführt. Innerhalb der Heizsteuerung 22 erfolgt ein Vergleich der gemessenen Temperatur mit einer vorgegebenen Solltemperatur des Führungsmantels 1. Im Fall einer Abweichung wird die Heizsteuerung 7 derart gesteuert, dass eine Erhöhung oder eine Absenkung der Temperatur innerhalb des Führungsmantels 1 sich einstellt, bis die für den Prozess gewünschte Oberflächentemperatur des Führungsmantels 1 erreicht ist.

Bei dem in Fig. 1 und 2 dargestellten Ausführungsbeispiel ist nur einer der Wärmerohre 15 mit einem Temperatursensor 16 kombiniert. Grundsätzlich sei hier angemerkt, dass auch mehrere Wärmerohre 15 einen Temperatursensor aufweisen könnten. Zudem ist die Ausbildung des Drehübertragers zur Weiterleitung der Messsignale durch eine Funkverbindung zwischen dem Sendeteil 20 und dem Empfangsteil 21 beispielhaft. Grundsätzlich können auch andere physikalische Prinzipien zur Übertragung der Messsignale von dem rotierenden Führungsmantel 1 zu einem stationären Teil genutzt werden.

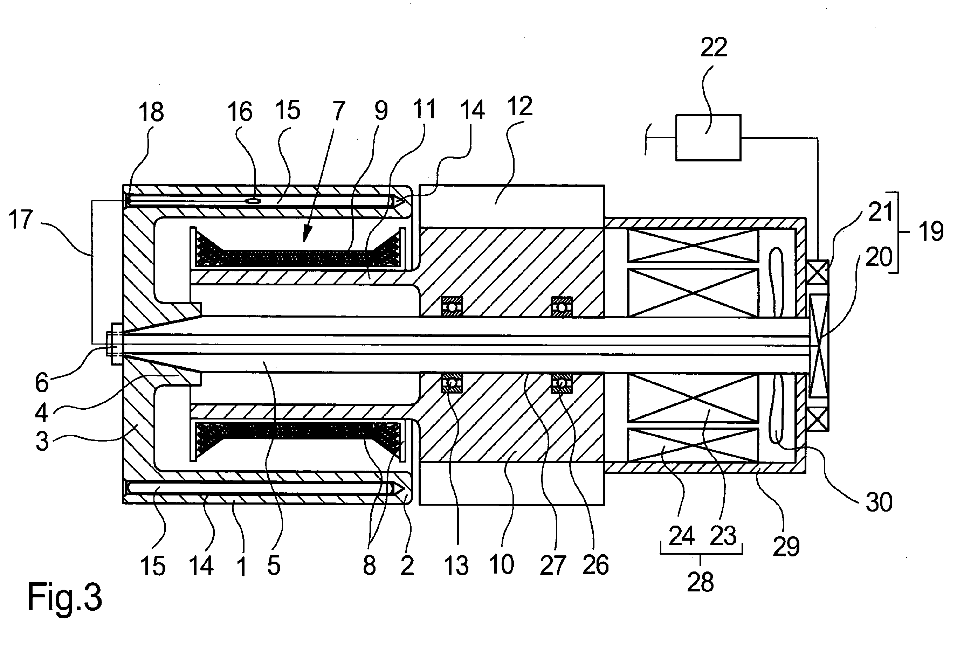

Hierzu ist in Fig. 3 ein weiteres Ausführungsbeispiel der erfindungsgemäßen Galette in einer Querschnittansicht dargestellt. Das Ausführungsbeispiel in Fig. 3 ist im Wesentlichen identisch zu dem Ausführungsbeispiel nach Fig. 1 und 2, so dass nachfolgend nur die wesentlichen Unterschiede erläutert werden.

Bei dem in Fig. 3 dargestellten Ausführungsbeispiel ist die Antriebswelle 5 als Hohlwelle ausgebildet und wird über zwei Lager 13 und 26 in einem Lagergehäuse 10 drehbar gelagert. Die Antriebswelle 5 durchdringt das Lagergehäuse 10 vollständig und ist mit einem aus dem Lagergehäuse 10 auf der gegenüberliegenden Seite herausragenden Abschnitt unmittelbar mit einem Elektromotor 28 verbunden. Hierzu ist ein Rotor 23 des Motors 28 unmittelbar der Antriebswelle 5 angeordnet. Der Rotor 23 wirkt mit einem Stator 24 zusammen, der in einem Motorgehäuse 29 gehalten ist. Das Motorgehäuse 29 umschließt den Motor 28 bis hin zur Antriebswelle 5, die am Ende mit einem Drehübertrager 19 gekoppelt ist. Der Drehübertrager 19 wird in diesem Fall durch ein Sendeteil 20 und einem Empfangsteil 21 gebildet. Das Sendeteil 20 ist am Ende der Antriebswelle 5 angeordnet und mit der Signalleitung 17 verbunden. Hierzu wird die Signalleitung 17 durch den Hohlraum der Antriebswelle 5 geführt.

Das Empfangsteil 21 ist korrespondierend zum Sendeteil 20 an dem Motorgehäuse 29 gehalten, wobei die Signale induktiv übertragen werden. Der Empfangsteil 21 ist mit der Heizsteuerung 22 verbunden.

In dem Wellenabschnitt zwischen dem Drehübertrager 19 und dem Rotor 23 ist ein Lüfterrad 30 angeordnet, mit welchem durch die Antriebswelle 5 antreibbar ist.

Die Funktion des in Fig. 3 dargestellten Ausführungsbeispiels der Galette ist identisch zu dem vorgenannten Ausführungsbeispiel, so dass hierzu keine weiteren Erläuterungen erfolgen.

Bei den gezeigten Ausführungsbeispielen ist der in einem der Wärmerohre 15 integrierte Temperatursensor 16 bevorzugt als Widerstandsthermometer ausgebildet. Der Nennwiderstand des Widerstandsthermometers wird dabei möglichst hoch gewählt, um geringe Massen bei dünnen Drähten zu erhalten. Zudem können auch längere Signalleitungen ohne negativen Einfluss des Leiterwiderstandes realisiert werden. So werden bevorzugt Pt 1000-Sensoren mit einem Nennwiderstand von 1 kOhm eingesetzt.

### Bezugszeichenliste

- 1: Führungsmantel
- 2: offenes Stirnende
- 3: geschlossenes Stirnende
- 4: Nabe
- 5: Antriebswelle
- 6: Fixiermittel
- 7: Heizeinrichtung
- 8: Induktionsspule
- 9: Windungen
- 10: Lagergehäuse
- 11: Heizträger
- 12: Kühlrippen
- 13: Lager
- 14: Sacklochbohrung
- 15: Wärmerohr
- 16: Temperatursensor
- 17: Signalleitung
- 18: Signalöffnung
- 19: Drehübertrager
- 20: Sendeteil
- 21: Empfangsteil
- 22: Heizsteuerung
- 23: Rotor
- 24: Stator
- 25: Deckel
- 26: Lager
- 27: Lagerbohrung
- 28: Motor
- 29: Motorgehäuse
- 30: Lüfterrad

## Patentansprüche

1. Galette zur Führung von Fäden mit einem antreibbaren Führungsmantel (1) und einer Heizeinrichtung (7) zum Erwärmen des Führungsmantels (1), wobei der Führungsmantel (1) zumindest ein Wärmerohr (15) aufweist, welches ein Arbeitsmedium zur Wärmeverteilung enthält und welches fest mit dem Führungsmantel (1) verbunden ist,
**dadurch gekennzeichnet, dass**
innerhalb des Wärmerohres (15) ein Temperatursensor (16) angeordnet ist, welcher mit einer aus dem Wärmerohr (15) herausführenden Signalleitung (17) verbunden ist.

2. Galette nach Anspruch 1,
**dadurch gekennzeichnet, dass**
die Signalleitung (17) durch eine abgedichtete Signalöffnung (18) an einem Ende des Wärmerohres (15) nach außen führbar ist.

3. Galette nach Anspruch 2,
**dadurch gekennzeichnet, dass**
das Wärmerohr (15) in einer axial ausgerichteten Sacklochbohrungen (14) des Führungsmantels (1) angeordnet ist und dass das Ende des Wärmerohres (15) mit der Signalleitung (14) der Öffnung der Sachlochbohrung (14) zugeordnet ist.

4. Galette nach Anspruch 3,
**dadurch gekennzeichnet, dass**
in dem Führungsmantel (1) mehrere Sacklochbohrungen (14) zur Aufnahme mehrere Wärmerohre (15) enthalten sind, die gleichmäßig über einen Umfang verteilt angeordnet sind.

5. Galette nach einem der Ansprüche 1 bis 4,
**dadurch gekennzeichnet, dass**
der Führungsmantel (1) topfförmig ausgebildet ist und ein offenes Stirnende (2) und ein gegenüberliegendes geschlossenes Stirnende (3) aufweist und dass der Führungsmantel (1) am geschlossen Stirnende (3) fest mit einer Antriebswelle (5) verbunden ist.

6. Galette nach Anspruch 5,
**dadurch gekennzeichnet, dass**
die Öffnungen der Sacklochbohrungen (14) in dem Führungsmantel (1) an dem geschlossenen Stirnende (3) ausgebildet sind.

7. Galette nach einem der Ansprüche 1 bis 6,
**dadurch gekennzeichnet, dass**
die Signalleitung (17) mit einem Drehübertrager (19) verbunden ist, der aus einem mit dem Führungsmantel (1) umlaufenden Sendeteil (20) und einem ortsfesten Empfangsteil (21) besteht.

8. Galette nach Anspruch 7,
**dadurch gekennzeichnet, dass**
der Sendeteil (20) im Bereich vom geschlossenen Stirnende (3) des Führungsmantels (1) oder am Umfang der Antriebswelle (5) angeordnet ist.

9. Galette nach Anspruch 7 oder 8,
**dadurch gekennzeichnet, dass**
der Empfangsteil (21) an einem ortsfesten Lagerträger (10) oder außerhalb der Galette angeordnet ist.

10. Galette nach einem der Ansprüche 1 bis 9,
**dadurch gekennzeichnet, dass**
der Temperatursensor (16) innerhalb des Wärmerohres (15) derart angeordnet ist, dass dieser von dem Arbeitsmedium umspült ist.

11. Galette nach Anspruch 10,
**dadurch gekennzeichnet, dass**
der Temperatursensor (16) als ein Widerstandsthermometer ausgebildet ist, welcher einen Nennwiderstand von 1 kOhm aufweist.

12. Galette nach einem der Ansprüche 1 bis 11,
**dadurch gekennzeichnet, dass**
die Heizeinrichtung (7) als eine Induktionsheizvorrichtung mit einer Induktionsspule (8) ausgebildet ist, welche Induktionsspule (8) mit Abstand zu dem Führungsmantel (1) angeordnet ist.

13. Galette nach Anspruch 12,
**dadurch gekennzeichnet, dass**
die Induktionsspule (8) eine Breite aufweist, die sich im wesentlichen vom offenen Stirnende (2) bis zum geschlossenen Stirnende (3) des Führungsmantels (1) erstreckt, wobei eine Dichte der Windungen (9) der Induktionsspule (8) zu den Stirnenden (2, 3) hin größer ist als in einem mittleren Bereich des Führungsmantels (1).

## Claims

1. A galette for guiding threads, having a guide casing (1) that can be driven and a heating device (7) for heating the guide casing (1), the guide casing (1) having at least one heating tube (15) which contains an operating medium for heat distribution and which is fixedly connected to the guide casing (1), **characterized in that** a temperature sensor (16), which is connected to a signal line (17) leading out of the heating tube (15), is arranged within the heating tube (15).

2. The galette as claimed in claim 1, **characterized in that** the signal line (17) can be routed to the outside through a sealed signal opening (18) at one end of the heating tube (15).

3. The galette as claimed in claim 2, **characterized in that** the heating tube (15) is arranged in an axially oriented blind hole bore (14) of the guide casing (1), and **in that** the end of the heating tube (15) with the signal line (17) is assigned to the opening of the blind hole bore (14).

4. The galette as claimed in claim 3, **characterized in that** the guide casing (1) comprises multiple blind hole bores (14), arranged in a uniformly distributed manner along a circumference, for the mounting of multiple heating tubes (15).

5. The galette as claimed in one of claims 1 to 4, **characterized in that** the guide casing (1) is pot-shaped and has an open face end (2) and an opposing closed face end (3), and **in that** the guide casing (1) is fixedly connected to a drive shaft (5) at the closed face end (3).

6. The galette as claimed in claim 5, **characterized in that** the openings of the blind hole bores (14) in the guide casing (1) are embodied in the closed face end (3).

7. The galette as claimed in one of the claims 1 to 6, **characterized in that** the signal line (17) is connected with a rotary transmitter (19) which consists of a transmitting part (20) rotating with the guide casing (1) and a stationary receiving part (21).

8. The galette as claimed in claim 7, **characterized in that** the transmitting part (20) is arranged in the region of the closed face end (3) of the guide casing (1) or on the circumference of the drive shaft (5).

9. The galette as claimed in claim 7 or 8, **characterized in that** the receiving part (21) is arranged on a stationary bearing support (10) or outside of the galette.

10. The galette as claimed in one of claims 1 to 9, **characterized in that** the temperature sensor (16) is arranged inside the heating tube (15) in such a way that it is immersed in the operating medium.

11. The galette as claimed in claim 10, **characterized in that** the temperature sensor (16) is embodied as a resistance thermometer which has a nominal resistance of 1 kOhm.

12. The galette as claimed in one of claims 1 to 11, **characterized in that** the heating device (7) is embodied as an induction heating device with an induction coil (8), said induction coil (8) being arranged at a distance from the guide casing (1).

13. The galette as claimed in claim 12, **characterized in that** the induction coil (8) has a width which essentially extends from the open face end (2) to the closed face end (3) of the guide casing (1), a density of the windings (9) of the induction coil (8) being greater toward the face ends (2, 3) than in a central region of the guide casing (1).

## Revendications

1. Galette pour le guidage de fils, comprenant une enveloppe de guidage (1) pouvant être entraînée et un dispositif de chauffage (7) pour chauffer l'enveloppe de guidage (1), l'enveloppe de guidage (1) présentant au moins un tube chauffant (15) qui contient un fluide de travail pour répartir la chaleur et qui est connecté fixement à l'enveloppe de guidage (1),
**caractérisée en ce**
**qu'**un capteur de température (16) est disposé à l'intérieur du tube chauffant (15), lequel est connecté à une ligne de signal (17) sortant du tube chauffant (15).

2. Galette selon la revendication 1,
**caractérisée en ce que**
la ligne de signal (17) peut être guidée vers l'extérieur à travers une ouverture de signal étanchéifiée (18) au niveau d'une extrémité du tube chauffant (15).

3. Galette selon la revendication 2,
**caractérisée en ce que**
le tube chauffant (15) est disposé dans un alésage borgne (14) de l'enveloppe de guidage (1) orienté axialement et **en ce que** l'extrémité du tube chauffant (15) est associée avec la ligne de signal (17) à l'ouverture de l'alésage borgne (14).

4. Galette selon la revendication 3,
**caractérisée en ce que**
dans l'enveloppe de guidage (1) sont réalisés plusieurs alésages borgnes (14) pour recevoir plusieurs tubes chauffants (15), lesquels sont répartis uniformément sur une périphérie.

5. Galette selon l'une quelconque des revendications 1 à 4,
**caractérisée en ce que**
l'enveloppe de guidage (1) est réalisée en forme de pot et présente une extrémité frontale ouverte (2) et une extrémité frontale fermée opposée (3) et **en ce que** l'enveloppe de guidage (1) est connectée fixement à un arbre d'entraînement (5) au niveau de l'extrémité frontale fermée (3).

6. Galette selon la revendication 5,
**caractérisée en ce que**
les ouvertures des alésages borgnes (14) sont réalisées dans l'enveloppe de guidage (1) au niveau de l'extrémité frontale fermée (3).

7. Galette selon l'une quelconque des revendications 1 à 6,
**caractérisée en ce que**
la ligne de signal (17) est connectée à un dispositif de transfert de rotation (19) qui se compose d'une partie émettrice (20) tournant avec l'enveloppe de guidage (1) et d'une partie réceptrice fixe (21).

8. Galette selon la revendication 7,
**caractérisée en ce que**
la partie émettrice (20) est disposée dans la région de l'extrémité frontale fermée (3) de l'enveloppe de guidage (1) ou au niveau de la périphérie de l'arbre d'entraînement (5).

9. Galette selon la revendication 7 ou 8,
**caractérisée en ce que**
la partie réceptrice (21) est disposée au niveau d'un support de palier fixe (10) ou à l'extérieur de la galette.

10. Galette selon l'une quelconque des revendications 1 à 9,
**caractérisée en ce que**
le capteur de température (16) est disposé à l'intérieur du tube chauffant (15) de telle sorte que le fluide de travail circule autour de celui-ci.

11. Galette selon la revendication 10,
**caractérisée en ce que**
le capteur de température (16) est réalisé sous forme de thermomètre à résistance, qui présente une résistance nominale de 1 kOhm.

12. Galette selon l'une quelconque des revendications 1 à 11,
**caractérisée en ce que**
le dispositif de chauffage (7) est réalisé sous forme de dispositif de chauffage à induction avec une bobine d'induction (8), laquelle bobine d'induction (8) étant disposée à distance de l'enveloppe de guidage (1).

13. Galette selon la revendication 12,
**caractérisée en ce que**
la bobine d'induction (8) présente une largeur qui s'étend essentiellement depuis l'extrémité frontale ouverte (2) jusqu'à l'extrémité frontale fermée (3) de l'enveloppe de guidage (1), une épaisseur des enroulements (9) de la bobine d'induction (8) vers les extrémités frontales (2, 3) étant plus importante que celle dans une région centrale de l'enveloppe de guidage (1).
